# FASCICULE DE BREVET EUROPEEN

(11) **EP 0 538 102 B1**
(45) Date de publication et mention de la délivrance du brevet: **29.04.1998**
(21) Numéro de dépôt: 92402746.9
(22) Date de dépôt: 08.10.1992
(51) Int. Cl.: C01B 13/11, H02M 7/48

(54) **Dispositif d'alimentation en énergie électrique d'un ozoneur**
Energieversorungseinrichtung eines Ozonerzeugers
Power supply device for ozonizer

(30) Priorité: 16.10.1991 FR 9112771
(43) Date de publication de la demande: 21.04.1993
(73) Titulaire: TRAILIGAZ - COMPAGNIE GENERALE DE L'OZONE, 95140 Garges-Les-Gonesse (FR)
(72) Inventeur: Moras, Denis, F-95380 Louvres (FR)
(74) Mandataire: Habasque, Etienne Joel Jean-François

(56) Documents cités:
- DE-A- 3 521 496
- FR-A- 2 580 875
- PATENT ABSTRACTS OF JAPAN, vol. 3, no. 128 (C-62) 24 octobre 1979; & JP-A-54 107 894

## Description

La présente invention concerne un dispositif d'alimentation en énergie électrique d'un ozoneur.

Les ozoneurs industriels connus actuellement sont de type tubulaire et comportent deux électrodes, l'une en verre de qualité électronique sur laquelle est appliquée une tension élevée et l'autre en inox, reliée à la terre.

Ces deux électrodes sont séparées par un espace de décharge dans lequel circule de l'oxygène ou de l'air sec contenant des molécules d'oxygène.

Si on applique aux bornes de ces électrodes une tension suffisamment élevée pour atteindre le point disruptif de l'air, il apparaît, par effet Coronna, une effluve entre celles-ci. Cette effluve ionise l'oxygène dans l'espace de décharge et forme ainsi un gaz composé principalement d'ozone dont la concentration varie en fonction de la puissance appliquée.

Il existe dans l'état de la technique, deux types différents de dispositifs d'alimentation de ces ozoneurs.

Les premiers comportent des moyens permettant d'alimenter l'ozoneur à partir du réseau d'alimentation en connectant un transformateur élévateur de tension sur celui-ci.

Le réglage de la puissance est obtenu par un régulateur à induction. Il est également possible d'utiliser un système électronique tel qu'un gradateur, interposé entre le réseau et le transformateur.

Cependant, l'ozoneur étant une charge très capacitive, il est important de compenser l'énergie réactive engendrée en prévoyant deux compensations, l'une série, constituée par exemple par une inductance à noyau et l'autre parallèle, constituée par exemple par l'entrefer du transformateur, pour compenser l'énergie réactive capacitive de l'ozoneur et obtenir une charge inductive.

Cette compensation est indispensable pour pouvoir débloquer correctement le gradateur et donc obtenir un facteur de puissance correct.

Les seconds dispositifs d'alimentation comportent des convertisseurs de puissance permettant d'augmenter la fréquence d'alimentation de l'ozoneur à peu près à 400 Hz et d'améliorer la production d'ozone.

Ces convertisseurs sont constitués par des onduleurs de type série ou parallèle, sur lesquels est connectée soit une charge résonnante de type LC, en général peu maniable et très coûteuse, soit une charge non résonnante, non compensée et à commutation forcée, beaucoup moins coûteuse que les charges LC mais présentant un facteur de puissance déplorable.

Dans les deux types de dispositifs décrits précédemment, il est indispensable de mettre en oeuvre une technique bien particulière de réglage de l'ensemble et notamment pour accorder le transformateur haute tension afin d'obtenir les meilleures conditions de fonctionnement.

Il est également très important de maitriser la technologie des interrupteurs de puissance tels que des thyristors qui sont mis à rude épreuve à cause des temps de commutation très rapides, des valeurs importantes de DI/DT et de DV/DT et des surtensions inverses très élevées occasionnées par le fait que l'ozoneur est une charge non linéaire.

Par ailleurs, ces systèmes présentent également le désavantage de nécessiter des moyens de démarrage compliquant les séquences de fonctionnement de l'ensemble.

Ceci aboutit à des dispositifs relativement complexes, d'un prix de revient élevé et dont le fonctionnement n'est pas optimisé.

Un exemple de dispositif d'alimentation en energie électrique est décrit dans le document JP-A-54107894

Le but de l'invention est donc de résoudre ces problèmes en proposant un dispositif d'alimentation qui soit simple, fiable, d'un prix de revient peu élevé et qui permette de faire fonctionner l'ozoneur dans des conditions optimales.

A cet effet, l'invention a pour objet un dispositif d'alimentation en énergie électrique d'un ozoneur, caractérisé en ce qu'il comporte une source d'alimentation en courant continu, aux bornes de laquelle est connecté un premier circuit résonnant, relié à travers au moins un organe commutateur à semi-conducteur piloté par des moyens de déclenchement, à un second circuit résonnant dans lequel est intégré un transformateur d'alimentation de l'ozoneur.

Avantageusement, le premier circuit résonnant est un circuit résonnant série d'injection de courant comportant un condensateur de stockage d'énergie connecté en parallèle aux bornes de la source d'alimentation et une inductance d'injection dont une borne est reliée à une borne du condensateur et dont une autre borne est reliée à une borne du second circuit résonnant, dont l'autre borne est reliée à l'autre borne du condensateur.

Avantageusement également, le second circuit résonnant est un circuit résonnant parallèle comportant une inductance en parallèle sur l'enroulement primaire du transformateur, l'ozoneur étant relié à l'enroulement secondaire de celui-ci.

L'invention sera mieux comprise à l'aide de la description qui va suivre, donnée uniquement à titre d'exemple et faite en se référant aux dessins annexés, sur lesquels :
- la Fig.1 représente un schéma synoptique d'un dispositif d'alimentation selon l'invention;
- la Fig.2 représente un schéma synoptique de moyens de déclenchement d'un organe commutateur à semi-conducteur piloté, entrant dans la constitution d'un dispositif selon l'invention; et
- les Fig.3,4 et 5 représentent des courbes illustrant différentes phases de fonctionnement du dispositif selon l'invention.

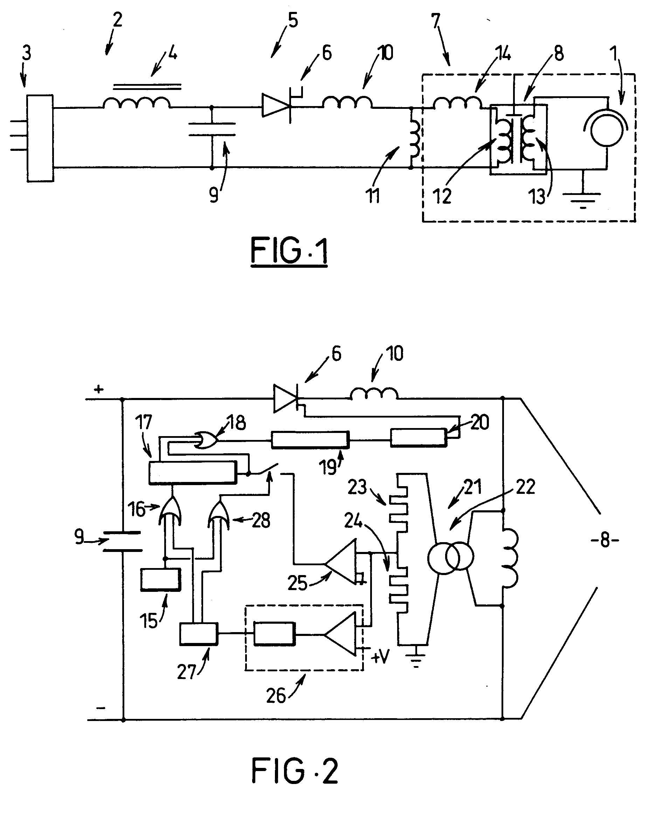

Ainsi qu'on peut le voir sur la Fig.1, un dispositif d'alimentation en énergie électrique selon l'invention, permet d'alimenter un ozoneur désigné par la référence générale 1 sur cette figure, à partir d'une source d'alimentation en courant continu désignée par la référence générale 2.

Cette source d'alimentation en courant continu comporte de manière classique un pont redresseur du type pont de Graetz, à thyristors, désigné par la référence générale 3 et une inductance de lissage 4.

Un premier circuit résonnant 5 est connecté aux bornes de cette source d'énergie et est relié à travers au moins un organe commutateur à semi-conducteur 6 piloté par des moyens de déclenchement qui seront décrits plus en détail par la suite, à un second circuit résonnant 7 dans lequel est intégré un transformateur 8 d'alimentation de l'ozoneur.

Avantageusement, le premier circuit résonnant est un circuit résonnant série d'injection de courant comportant un condensateur de stockage d'énergie 9 connecté en parallèle aux bornes de la source d'alimentation et une inductance d'injection 10 dont une borne est reliée à une borne du condensateur et dont l'autre borne est reliée à une borne du second circuit résonnant 7. L'autre borne de ce second circuit résonnant est reliée à l'autre borne du condensateur. Ce second circuit résonnant est avantageusement un circuit résonnant parallèle comportant une inductance 11 en parallèle sur l'enroulement primaire 12 du transformateur 8.

L'ozoneur 1 est connecté aux bornes de l'enroulement secondaire 13 de ce transformateur.

L'inductance de fuite du transformateur est schématisée par l'élément désigné par la référence 14 sur cette figure.

Dans ce circuit résonnant parallèle, l'élément capacitif est composé par l'ozoneur lui-même.

La fréquence de résonance du circuit série est fixée à peu près au double de la fréquence de résonance du circuit parallèle pour permettre une optimisation du fonctionnement de l'ensemble comme cela sera décrit plus en détail par la suite.

Par ailleurs, l'organe commutateur à semi-conducteur piloté, désigné par la référence 6, comprend par exemple au moins un thyristor dont la commande sera décrite plus en détail par la suite.

La charge étant déterminée pour osciller avec un amortissement faible, on débloque le thyristor de façon qu'il y ait un apport d'énergie active du circuit série au circuit parallèle.

Un mode de réalisation des moyens de déclenchement de l'organe commutateur à semi-conducteur piloté est représenté sur la Fig.2.

On reconnaît sur cette figure, le condensateur de stockage d'énergie 9, le thyristor 6, l'inductance d'injection 10 et le transformateur d'alimentation de l'ozoneur 8.

Les moyens de déclenchement du thyristor comprennent avantageusement des moyens de génération d'un créneau de démarrage de celui-ci, activés par exemple par un utilisateur, lors du déclenchement du fonctionnement de ce dispositif d'alimentation.

Ces moyens comprennent par exemple une bascule 15 délivrant un signal en créneau à la détection d'un front montant par exemple d'un signal d'horloge.

La sortie de cette bascule est reliée à une porte OU 16 dont la sortie est reliée à une chaîne de génération d'une salve d'impulsions de pilotage du thyristor 6, cette chaîne comportant les éléments désignés par les références 17,18,19 et 20 sur cette figure et comportant respectivement des moyens de mise en forme de la sortie de la porte OU 16, une autre porte OU 18, un générateur de salve d'impulsions 19 et un amplificateur 20 dont la sortie est connectée à la grille du thyristor 6.

Les moyens de déclenchement comprennent également des moyens 21 de mesure d'une valeur représentative de la tension aux bornes du transformateur.

Ces moyens comprennent par exemple un convertisseur de tension 22 aux bornes duquel est connecté un pont diviseur constitué de deux résistances 23 et 24.

On notera que le convertisseur de tension peut par exemple être constitué par un transformateur d'isolement.

La sortie de ce pont diviseur est reliée à des moyens 25 de détection du passage de cette tension à zéro pour commander des moyens de génération d'une salve d'impulsions afin de redéclencher le thyristor à chaque passage par zéro de cette tension.

Dans le mode de réalisation représenté, ces moyens sont constitués par la chaine décrite précédemment et déjà utilisée lors du démarrage du thyristor.

Ces moyens de déclenchement comprennent également, connectés à la sortie des moyens de mesure de la tension aux bornes du transformateur, des moyens 26 de comparaison de cette tension à une valeur seuil + V représentative d'une valeur de tension au-dessous de laquelle l'ozoneur ne produit plus d'ozone, comme cela sera décrit plus en détail par la suite, pour commander les moyens de génération d'une salve d'impulsions afin de déclencher un redémarrage de celui-ci.

La sortie de ces moyens de comparaison 26 est en effet reliée à une bascule 27 de pilotage des moyens de génération du créneau de démarrage 16,17 décrits précédemment, à travers la porte OU 16 et une autre porte OU 28 d'inhibition des moyens de détection du passage par zéro de la tension aux bornes du transformateur.

On conçoit donc que dans une première phase de fonctionnement, le condensateur de stockage d'énergie 9 se charge à travers l'inductance de lissage 4.

Le thyristor est ensuite déclencher par pilotage de la bascule 15 et génération d'un créneau de démarrage de ce thyristor pour raccorder le circuit série d'injection de courant au circuit parallèle.

Ensuite, le thyristor est redéclenché à chaque passage par zéro de la tension aux bornes de la charge et la variation de puissance est obtenue par contrôle de l'amorçage des thyristors du pont redresseur 3 de la source d'alimentation, pour régler le niveau de charge du condensateur de stockage d'énergie.

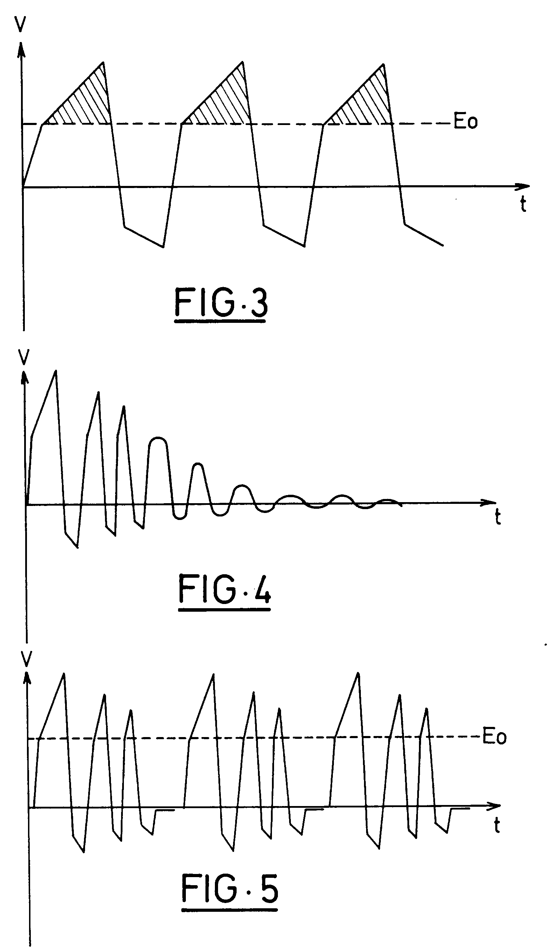

Le signal théorique de tension obtenu aux bornes du transformateur est représenté sur la Fig.3.

L'utilisation d'un seul organe commutateur à semi-conducteur engendre une onde de tension qui génère de l'ozone uniquement sur la partie positive du signal et lorsque la tension appliquée est supérieure à EO correspondant à la valeur disruptive de l'air.

Cependant, la tension moyenne aux bornes du transformateur d'alimentation de l'ozoneur n'est pas nulle, ce qui engendre un élément résistif dans le circuit résonnant parallèle. Il apparaît donc qu'un phénomène d'amortissement du signal de tension est appliqué aux bornes de la charge comme on peut le voir sur la Fig.4.

Pour résoudre ce problème, on utilise le fait que la tension appliquée est à un moment ou à un autre inférieure à la tension disruptive de l'air, c'est à dire inférieure à la tension au-dessous de laquelle l'ozoneur produit de l'ozone, pour réaliser une remise à zéro de l'ensemble et réaliser un nouveau démarrage de celui-ci par génération d'un nouveau créneau de démarrage à l'aide de la bascule 27.

On voit en effet sur la Fig.3, que le générateur d'ozone n'engendre d'ozone que si la tension qui lui est appliquée est supérieure à la valeur EO correspondant à la valeur de tension du point disruptif de l'air.

Ainsi qu'on l'a indiqué précédemment, le démarrage du dispositif se fait par génération d'un créneau de démarrage à la suite de la détection d'un front montant par exemple d'une horloge, par la bascule 15.

Durant cette phase de démarrage, les moyens de détection du passage à zéro de la tension aux bornes du transformateur désignés par la référence 25 sur la figure 2, sont inhibés, de même que les moyens de comparaison 26 et la bascule 27. L'ordre de démarrage engendre un premier créneau de démarrage qui est mis en forme dans la chaîne de génération de salve décrite précédemment et se traduit par la génération d'une salve d'impulsions assurant la fermeture du thyristor et permettant de débloquer les moyens de détection de passage à zéro de la tension aux bornes du transformateur et les moyens de comparaison.

Ceux-ci prennent alors le relais des moyens de génération du créneau de démarrage et assurent la commutation du thyristor par l'oscillation engendrée dans le circuit parallèle à travers le transformateur d'isolement 22 et le pont diviseur 23,24.

Du fait de l'amortissement de la tension aux bornes du transformateur, les moyens de comparaison détectent le passage de la tension au-dessous du point disruptif de l'air, EO, et réinitialisent le dispositif en déclenchant une nouvelle phase de démarrage de celui-ci par pilotage des moyens de génération d'un créneau de démarrage du thyristor.

On conçoit que tant que la tension appliquée aux bornes de la charge est supérieure à la valeur de tension au-dessous de laquelle l'ozoneur ne produit plus d'ozone, le déclenchement du thyristor est assuré par les moyens de détection de passage à zéro de la tension aux bornes du transformateur et que lorsque cette tension est inférieure à ce point disruptif, les moyens de comparaison et la bascule associée déclenchent un redémarrage de l'ensemble, ce qui permet de réinitialiser le dispositif.

Pour arrêter le dispositif, il suffit d'inhiber les moyens de détection du passage par zéro de la tension aux bornes du transformateur, pour qu'il n'y ait plus de déclenchement du thyristor. Cette inhibition est par exemple commandée par l'utilisateur.

La Fig.5 illustre le signal de tension obtenu aux bornes de la charge.

Le démarrage et l'arrêt du dispositif sont commandés par exemple par l'utilisateur grâce à des interrupteurs de démarrage et d'arrêt de type connu en soi, reliés à la bascule de démarrage 15 et aux moyens 25 de détection de passage à zéro de la tension aux bornes du transformateur.

Bien que sur la Fig.1, on ait représenté l'inductance d'injection raccordée à la borne du condensateur reliée à la borne positive de la source d'alimentation, celle-ci peut également être raccordée à la borne de celui-ci reliée à la borne négative de la source d'alimentation.

Sur cette figure, l'organe commutateur à semi-conducteur piloté est connecté en série avec l'inductance d'injection dans une branche de liaison des circuits résonnant série et parallèle.

Il va de soi que l'inductance et cet organe commutateur à semi-conducteur peuvent être prévus chacun dans l'une des branches de liaison du circuit série au circuit parallèle.

Enfin, on notera que la fréquence de résonance du circuit résonnant parallèle peut être fixé à peu près à 400 Hz, tandis que celle du circuit résonnant série peut être fixé à peu près à 800 Hz, ce qui permet d'obtenir un fonctionnement optimal de l'ozoneur.

## Revendications

1. Dispositif d'alimentation en énergie électrique d'un ozoneur comportant une source d'alimentation aux bornes de laquelle est connecté un premier circuit résonnant (5) , lui-même relié à un second circuit résonnant (7) alimentant l'ozoneur, caractérisé en ce que la source d'alimentation est une source d'alimentation en courant continu (2), en ce qu'un transformateur (8) d'alimentation de l'ozoneur (1) est intégré dans le second circuit résonnant (7), et en ce que le premier circuit résonnant (5) est relié au second circuit résonnant (7) à travers au moins un organe commutateur à semi-conducteur (6) piloté par des moyens de déclenchement, lesquels moyens de déclenchement sont adaptés pour assurer le déblocage de l'organe commutateur à semi-conducteur pour un apport d'énergie active du premier circuit résonnant (5) au second circuit résonnant (7) lorsque la tension aux bornes du transformateur est inférieure à une valeur de tension au-dessous de laquelle l'ozoneur ne produit plus d'ozone.

2. Dispositif selon la revendication 1, caractérisé en ce que le premier circuit résonnant (5) est un circuit résonnant série d'injection de courant comportant un condensateur (9) de stockage d'énergie, connecté en parallèle aux bornes de la source d'alimentation (2) et une inductance d'injection(10) dont une borne est reliée à une borne du condensateur et dont l'autre borne est reliée à une borne du second circuit résonnant (7), dont l'autre borne est reliée à l'autre borne du condensateur (9).

3. Dispositif selon la revendication 1 ou 2, caractérisé en ce que le second circuit résonnant (7) est un circuit résonnant parallèle comportant une inductance (11) en parallèle sur l'enroulement primaire (12) du transformateur (8), l'ozoneur (1) étant relié à l'enroulement secondaire (13) de celui-ci.

4. Dispositif selon la revendication 2, caractérisé en ce que la fréquence de résonance du circuit série est à peu près égale au double de la fréquence de résonance du circuit parallèle.

5. Dispositif selon l'une quelconque des revendications précédentes, caractérisé en ce que ledit organe commutateur à semi-conducteur piloté comprend au moins un thyristor (6).

6. Dispositif selon l'une quelconque des revendications précédentes, caractérisé en ce que les moyens de déclenchement comprennent des moyens (15, 16, 17) de génération d'un créneau de démarrage de l'organe commutateur à semi-conducteur piloté, et des moyens (21) de mesure d'une valeur représentative de la tension aux bornes du transformateur, dont la sortie est reliée à des moyens (25) de détection du passage de cette tension à zéro, pour commander des moyens (18, 19, 20) de génération d'impulsions de déclenchement de l'organe commutateur à semi-conducteur piloté, lors du démarrage du dispositif et à chaque passage par zéro de cette tension.

7. Dispositif selon la revendication 6, caractérisé en ce que les moyens de déclenchement comprennent en outre, connectés à la sortie des moyens (21) de mesure de la tension aux bornes du transformateur, des moyens (26) de comparaison de cette tension à une valeur de tension au-dessous de laquelle l'ozoneur ne produit plus d'ozone, pour commander les moyens de génération (16, 17, 18, 19, 20) des impulsions de déclenchement du thyristor afin de déclencher un redémarrage de celui-ci.

8. Dispositif selon la revendication 7, caractérisé en ce que les moyens de déclenchement comprennent des moyens de démarrage du dispositif par pilotage des moyens de génération (15) du créneau de démarrage et des moyens de coupure du dispositif par inhibition des moyens (25) de détection du passage par zéro de la tension aux bornes du transformateur.

9. Dispositif selon l'une quelconque des revendications précédentes, caractérisé en ce que l'inductance d'injection (10) est raccordée à une borne du condensateur, reliée à la borne positive de la source d'alimentation.

10. Dispositif selon l'une quelconque des revendications 1 à 8, caractérisé en ce que l'inductance d'injection (10) est raccordée à une borne du condensateur, reliée à la borne négative de la source d'alimentation.

11. Dispositif selon l'une quelconque des revendications précédentes, caractérisé en ce que l'organe commutateur à semi-conducteur piloté est connecté en série avec l'inductance d'injection (10) dans une branche de liaison du circuit série au circuit parallèle.

12. Dispositif selon l'une quelconque des revendications 1 à 10, caractérisé en ce que l'inductance d'injection (10) est connectée dans la branche de liaison du circuit série au circuit parallèle autre que celle dans laquelle est connecté l'organe commutateur à semi-conducteur piloté.

13. Dispositif selon l'une quelconque des revendications précédentes, caractérisé en ce que la fréquence de résonance du circuit résonnant parallèle est à peu près égale à 400 Hz, tandis que celle du circuit résonnant série est à peu près égale à 800 Hz.

## Claims

1. Apparatus for supplying electrical energy to an ozonizer comprising a supply source the terminals of which are connected to a first resonating circuit (5), which is in turn connected to a second resonating circuit (7) supplying the ozonizer, characterised in that the supply source is a d.c. supply source (2), in that a supply transformer (8) for the ozonizer (1) is integrated in the second resonating circuit (7), and in that the first resonating circuit (5) is connected to the second resonating circuit (7) through at least one semi-conductor switching member (6) controlled by actuating means which are adapted to ensure that the semi-conductor switching member is unblocked in order to deliver active energy from the first resonating circuit (5) to the second resonating circuit (7) when the voltage at the terminals of the transformer is less than a voltage value below which the ozonizer no longer produces ozone.

2. Apparatus according to claim 1, characterised in that the first resonating circuit (5) is a series resonating circuit for current injection, comprising an energy storage capacitor (9) connected in parallel to the terminals of the supply source (2) and an injection inductor (10) one terminal of which is connected to a terminal of the capacitor and the other terminal of which is connected to a terminal of the second resonating circuit (7), the other terminal of which is connected to the other terminal of the capacitor (9).

3. Apparatus according to claim 2, characterised in that the second resonating circuit (7) is a parallel resonating circuit comprising an inductor (11) in parallel on the primary winding (12) of the transformer (8), the ozonizer (1) being connected to the secondary winding (13) thereof.

4. Apparatus according to claim 3, characterised in that the resonating frequency of the series circuit is equal to approximately twice the resonating frequency of the parallel circuit.

5. Apparatus according to any one of the preceding claims, characterised in that said controlled semi-conductor switching member comprises at least one thyristor (6).

6. Apparatus according to any one of the preceding claims, characterised in that the actuating means comprise means (15, 16, 17) for generating an activation gate for the controlled semi-conductor switching member, and means (21) for measuring a value representative of the voltage at the terminals of the transformer, the output of which is connected to means (25) for detecting the change in this voltage to zero, in order to control means (18, 19, 20) for generating pulses for actuating the controlled semi-conductor switching member, when the apparatus starts up and each time the voltage goes to zero.

7. Apparatus according to claim 6, characterised in that the actuating means further comprise, connected to the output of the means (21) for measuring the voltage at the terminals of the transformer, means (26) for comparing this voltage with a voltage value below which the ozonizer no longer produces ozone, in order to control the means (16, 17, 18, 19, 20) for generating the actuating pulses for the thyristor so as to cause the latter to reactivate.

8. Apparatus according to claim 7, characterised in that the actuating means comprise means for starting up the apparatus by controlling the means (15) for generating the activation gate and means for switching off the apparatus by inhibiting the means (25) for detecting the change to zero of the voltage at the terminals of the transformer.

9. Apparatus according to any one of the preceding claims, characterised in that the injection inductor (10) is connected to a terminal of the capacitor, connected to the positive terminal of the supply source.

10. Apparatus according to any one of claims 1 to 8, characterised in that the injection inductor (10) is connected to a terminal of the capacitor, connected to the negative terminal of the supply source.

11. Apparatus according to any one of the preceding claims, characterised in that the controlled semi-conductor switching member is connected in series to the injection inductor (10) in a branch connecting the series circuit to the parallel circuit.

12. Apparatus according to any one of claims 1 to 10, characterised in that the injection inductor (10) is connected in the branch connecting the series circuit to the parallel circuit other than that in which the controlled semi-conductor switching member is connected.

13. Device according to any one of the preceding claims, characterised in that the resonating frequency of the parallel resonating circuit is equal to approximately 400 Hz, while that of the series resonating circuit is equal to approximately 800 Hz.

## Patentansprüche

1. Vorrichtung zur elektrischen Energieversorgung eines Ozonerzeugers mit einer Stromquelle, welche über Anschlußklemmen mit einem ersten Resonanzschaltkreis (5) verbunden ist, der an einen den Ozonerzeuger versorgenden zweiten Resonanzschaltkreis (7) angeschlossen ist,
**dadurch gekennzeichnet,**
daß die Stromquelle eine Gleichstromquelle (2) ist, daß ein Transformator (8) zur Versorgung des Ozonerzeugers (1) in dem zweiten Resonanzschaltkreis (7) integriert ist,
daß der erste Resonanzschaltkreis (5) mit dem zweiten Resonanzschaltkreis (7) über wenigstens eine Halbleiterschalteinrichtung (6) verbunden ist, die über eine Auslöseeinrichtung steuerbar ist, wobei die Auslöseeinrichtung zur Sicherstellung der Entsperrung der Halbleiterschalteinrichtung bei aktiver Energiezufuhr von dem ersten Resonanzschaltkreis (5) zu dem zweiten Resonanzschaltkreis (7) geeignet ist, wenn die Spannung an den Anschlußklemmen des Transformators niedriger ist als ein Spannungswert, unter welchem der Ozonerzeuger kein Ozon mehr erzeugt.

2. Vorrichtung nach Anspruch 1,
**dadurch gekennzeichnet,**
daß der erste Resonanzschaltkreis (5) ein Serien-Resonanzschaltkreis mit Stromeinspeisung ist, der aus einem Kondensator (9) zur Energiespeicherung, welcher parallel an die Stromquelle (2) angeschlossen ist, und aus einer Einspeiseinduktivität (10) besteht, deren eine Anschlußklemme an eine Anschlußklemme des Kondensators und deren andere Anschlußklemme an eine Anschlußklemme des zweiten Resonanzschaltkreises (7) angeschlossen ist, dessen andere Anschlußklemme mit der anderen Anschlußklemme des Kondensators (9) verbunden ist.

3. Vorrichtung nach Anspruch 2,
**dadurch gekennzeichnet,**
daß der zweite Resonanzschaltkreis (7) ein Parallelresonanzschaltkreis ist mit einer Induktivität (11), welche parallel zu der Primärwicklung (12) des Transformators (8) geschaltet ist, wobei der Ozonerzeuger (1) an dessen Sekundärwicklung (13) angeschlossen ist.

4. Vorrichtung nach Anspruch 3,
**dadurch gekennzeichnet,**
daß die Resonanzfrequenz des Serienschaltkreises ungefähr doppelt so hoch ist wie die Resonanzfrequenz des Parallelschaltkreises ist.

5. Vorrichtung nach einem der vorangehenden Ansprüche,
**dadurch gekennzeichnet,**
daß die gesteuerte Halbleiterschalteinrichtung wenigstens einen Thyristor (6) aufweist.

6. Vorrichtung nach einem der vorangehenden Ansprüche,
**dadurch gekennzeichnet,**
daß die Auslöseeinrichtung eine Einrichtung (15, 16, 17) zur Erzeugung eines Startimpulses für die gesteuerte Halbleiterschalteinrichtung und eine Einrichtung (21) zur Messung eines Wertes, welcher eine Spannung an den Anschlußklemmen des Transformators angibt, aufweist, deren Ausgang an eine Einrichtung (25) zur Erfassung des Nulldurchgangs der Spannung angeschlossen ist, um beim Start der Vorrichtung und bei jedem Nulldurchgang der Spannung Einrichtungen (18, 19, 20) zur Erzeugung von Auslöseimpulsen für die gesteuerte Halbleiterschalteinrichtung zu steuern.

7. Vorrichtung nach Anspruch 6,
**dadurch gekennzeichnet,**
daß die Auslöseeinrichtung außerdem angeschlossen an den Ausgang der Einrichtung (21) zur Messung der an den Anschlußklemmen des Transformators anliegenden Spannung eine Einrichtung (26) zum Vergleich der Spannung mit einem Spannungswert aufweist, unter welchem der Ozonerzeuger kein Ozon mehr erzeugt, um eine Einrichtung (16, 17, 18, 19, 20) zur Erzeugung der Auslöseimpulse des Thyristors zum Auslösen von dessen erneuter Zündung zu steuern.

8. Vorrichtung nach Anspruch 7,
**dadurch gekennzeichnet,**
daß die Auslöseeinrichtung eine Einrichtung zum Starten der Vorrichtung durch Steuerung der Einrichtung (15) zur Erzeugung eines Startimpulses und eine Einrichtung zum Ausschalten der Vorrichtung durch Sperren der Einrichtung (25) zur Erfassung des Nulldurchganges der an den Anschlußklemmen des Transformators anliegenden Spannung aufweist.

9. Vorrichtung nach einem der vorangehenden Ansprüche,
**dadurch gekennzeichnet,**
daß die Einspeiseinduktivität (10) an eine Anschlußklemme des Kondensators angeschlossen ist, die mit einer positiven Anschlußklemme der Stromquelle verbunden ist.

10. Vorrichtung nach Anspruch 1 bis 8,
**dadurch gekennzeichnet,**
daß die Einspeiseinduktivität (10) an eine Anschlußklemme des Kondensators angeschlossen ist, die mit der negativen Anschlußklemme der Stromquelle verbunden ist.

11. Vorrichtung nach einem der vorangehenden Ansprüche,
**dadurch gekennzeichnet,**
daß die gesteuerte Halbleiterschalteinrichtung mit der Einspeiseinduktivität (10) in einem Verbindungszweig des Serienschaltkreises mit dem Parallelschaltkreis in Serie geschaltet ist.

12. Vorrichtung nach einem der Ansprüche 1 bis 10,
**dadurch gekennzeichnet,**
daß in die Einspeiseinduktivität (10) in demjenigen Verbindungszweig des Serienschaltkreises mit dem Parallelschaltkreis angeschlossen ist, welcher nicht derjenige ist, in dem die gesteuerte Halbleiterschalteinrichtung angeschlossen ist.

13. Vorrichtung nach einem der vorangehenden Ansprüche,
**dadurch gekennzeichnet,**
daß die Resonanzfrequenz des parallelen Resonanzschaltkreises ungefähr bei 400 Hz liegt, wohingegen diejenige des Serienresonanzschaltkreises ungefähr bei 800 Hz liegt.
